# DEMANDE DE BREVET EUROPEEN

(11) **EP 1 850 300 A1**
(43) Date de publication de la demande: **31.10.2007**
(21) Numéro de dépôt: 07107085.8
(22) Date de dépôt: 27.04.2007
(51) Int. Cl.: G08B 13/196, G08B 25/10

(54) **Système de surveillance d'un moyen de transport**

(30) Priorité: 28.04.2006 FR 0651521
(71) Demandeur: TN International, 78182 Montigny Le Bretonneux (FR)
(72) Inventeur: Finker, Dimitri, 78150 Le Chesnay (FR); Chanson, Daniel, 44240 La Chapelle sur Erdre (FR)
(74) Mandataire: Poulin, Gérard

(57) **Abrégé**

Système de surveillance d'un moyen de transport.

Il comprend :
- au moins une caméra (8) embarquée à bord du moyen de transport (2);
- un moyen de détection de mouvement (31) aux abords du moyen de transport ;
- un serveur embarqué (14) qui peut recevoir des images de la caméra (8) et des informations du moyen de détection de mouvement (31) aux abords du moyen de transport ;
- un moyen de télécommunication (18, 20) pour transmettre des données fournies par le serveur (14) à un centre de surveillance (46);
- un moyen (30) de détection de l'arrêt du moyen de transport,
- le serveur enclenchant la mise sous tension ou hors tension de la caméra et activant ou désactivant le moyen de détection de mouvement aux abords du moyen de transport en fonction des informations qu'il reçoit du moyen (30) de détection de l'arrêt du moyen de transport.

## Description

### DOMAINE TECHNIQUE

L'invention concerne un système de surveillance d'un moyen de transport embarqué à bord du moyen de transport lui-même.

Aujourd'hui la seule possibilité d'assurer la surveillance d'un moyen de transport, par exemple un camion ou un wagon de chemin de fer en stationnement dans une gare de triage, afin d'assurer la détection d'une intrusion est le gardiennage.

Le gardiennage humain de wagons isolés présente de nombreux inconvénients. Outre le fait qu'il est coûteux, il n'est possible que lors d'arrêts longs programmés dans des gares de triage présélectionnées. D'autre part il peut être relativement inefficace si le gardien doit parcourir des distances importantes ou s'il dispose d'une mauvaise visibilité sur les wagons à surveiller.

On connaît par ailleurs (US 2004/0123 328) un véhicule de surveillance mobile. Il comporte un système de surveillance prévu pour transmettre des images et répondre à des ordres reçus par Internet. Le système comporte au moins une caméra vidéo et un encodeur vidéo couplé à la caméra vidéo. L'encodeur vidéo est prévu pour encoder un signal de sortie de la caméra sous forme digitale. Le système comprend en outre un serveur vidéo couplé à l'encodeur vidéo. Le serveur est configuré pour formater une sortie de l'encodeur vidéo de telle manière que la vidéo peut être transmise par Internet. Le système de surveillance comporte également un module de communication couplé au serveur vidéo. Le module de communication est configuré pour envoyer le format vidéo comprimé comme messages par Internet.

Toutefois, un véhicule de surveillance de ce type nécessite qu'un opérateur distant suive en permanence les images émises, ce qui prend beaucoup de temps, et par conséquent revient cher. De plus, ce système fonctionne en permanence de telle sorte qu'il n'est pas économe en batteries.

On connaît encore (WO 01/97524) un système de vidéosurveillance embarqué sur un véhicule tel qu'un camion comprenant au moins une caméra vidéo qui génère des signaux vidéo d'un incident se produisant aux abords du véhicule, un dispositif d'enregistrement à accès codé pour stocker lesdits signaux vidéo, un code pour permettre un accès au dispositif d'enregistrement et des moyens pour télédécharger les signaux vidéo du dispositif d'enregistrement à accès codé. Toutefois, ce système fonctionne également en permanence de telle sorte que sa consommation d'énergie n'est pas optimisée.

### EXPOSE DE L'INVENTION

La présente invention a pour objet un système de surveillance d'un moyen de transport qui remédie aux inconvénients du gardiennage humain et des dispositifs de surveillance vidéo actuellement connus en permettant d'assurer une surveillance automatisée, nécessitant peu de personnel de surveillance. Enfin, le système doit consommer peu d'énergie électrique de manière à accroître son autonomie.

Ces buts sont atteints conformément à l'invention par le fait que le système de surveillance comprend :
- au moins une caméra embarquée à bord du moyen de transport, le champ de cette caméra couvrant la totalité des abords du moyen de transport ;
- un moyen de détection de mouvement aux abords du moyen de transport ;
- un serveur embarqué qui peut recevoir des images de la caméra et des informations du moyen de détection de mouvement aux abords du moyen de transport ;
- un moyen de télécommunication pour transmettre des données fournies par le serveur à un centre de surveillance situé à distance du moyen de transport ;
- un moyen de détection de l'arrêt du moyen de transport,
- le serveur enclenchant la mise sous tension ou hors tension de la caméra et activant ou désactivant le moyen de détection de mouvement aux abords du moyen de transport en fonction des informations qu'il reçoit du moyen de détection de l'arrêt du moyen de transport.

Dans un mode de fonctionnement normal, le serveur enclenche la mise sous tension de la caméra et active le moyen de détection de mouvement aux abords du moyen de transport lorsqu'il a reçu du moyen de détection de l'arrêt du moyen de transport l'information que ce dernier est à l'arrêt, le serveur transmettant alors des données au centre de surveillance par l'intermédiaire du moyen de télécommunication lorsqu'un mouvement a été détecté aux abords du moyen de transport, le serveur met la caméra hors tension et désactive le moyen de détection de mouvement aux abords du moyen de transport lorsqu'il a reçu du moyen de détection de l'arrêt du moyen de transport l'information que ce dernier est en mouvement.

Dans un mode d'hibernation, le serveur enclenche la mise hors tension de la caméra et désactive le moyen de détection de mouvement aux abords du moyen de transport, que le moyen de transport soit en mouvement ou à l'arrêt.

Dans un mode de fonctionnement forcé, le serveur enclenche la mise sous tension en continu de la caméra, que le moyen de transport soit en mouvement ou à l'arrêt, le serveur transmettant alors des données en continu au centre de surveillance par l'intermédiaire du moyen de télécommunication.

Le moyen de détection de mouvement aux abords du moyen de transport est constitué soit par un détecteur à infrarouge, soit par un traitement par le serveur des images qu'il reçoit de la caméra afin de détecter un mouvement dans son champ

Avantageusement, les données transmises par le moyen de télécommunication comprennent des images des abords du wagon.

Dans une réalisation préférée, les données transmises par le moyen de télécommunication comprennent, outre des images, des données choisies dans le groupe comprenant les coordonnées GPS du wagon, l'état de batteries d'alimentation du système, l'horodatage des images, un numéro d'identification du wagon, un numéro d'identification de la caméra, l'état arrêté ou en mouvement du wagon, le mode de fonctionnement normal, en hibernation ou forcé du système, des sons.

Dans des réalisations particulières, les moyens de détection de mouvement sont constitués soit par un détecteur de vibration, soit par un détecteur de distance à ultrasons.

De préférence le moyen de détection de mouvement aux abords du moyen de transport détecte le mouvement dans le champ de la caméra.

De préférence, le système de surveillance comporte des moyens de stockage des images prises par la caméra.

Avantageusement, la caméra est apte à enregistrer des images à partir d'une luminosité égale 0,0003 lux.

Avantageusement, le système de surveillance comporte au moins un projecteur à infrarouge.

Dans une réalisation particulière le système de surveillance comporte deux caméras situées à des coins diagonalement opposés du wagon.

Dans une autre réalisation particulière, le système de surveillance comporte quatre caméras situées aux quatre coins du wagon.

De préférence, chaque caméra comprend une tête reliée à un processeur, ce processeur étant unique pour l'ensemble des caméras s'il y en a plusieurs, le processeur étant disposé dans un boîtier qui contient le serveur embarqué, les têtes des caméras étant seules extérieures au boîtier.

D'autres caractéristiques et avantages de l'invention apparaîtront encore à la lecture de la description qui suit d'exemples de réalisation donnés à titre illustratif en référence aux figures annexées. Sur ces figures :
- Les figures 1 et 2 sont respectivement une vue en élévation et une vue de dessus d'un wagon surveillé par le système de la présente invention ;
- la figure 3 est un schéma d'un boîtier électronique faisant partie d'un système de surveillance conforme à la présente invention ;
- la figure 4 est un schéma d'ensemble du système de surveillance de l'invention ;
- la figure 5 est un logigramme du système de l'invention.

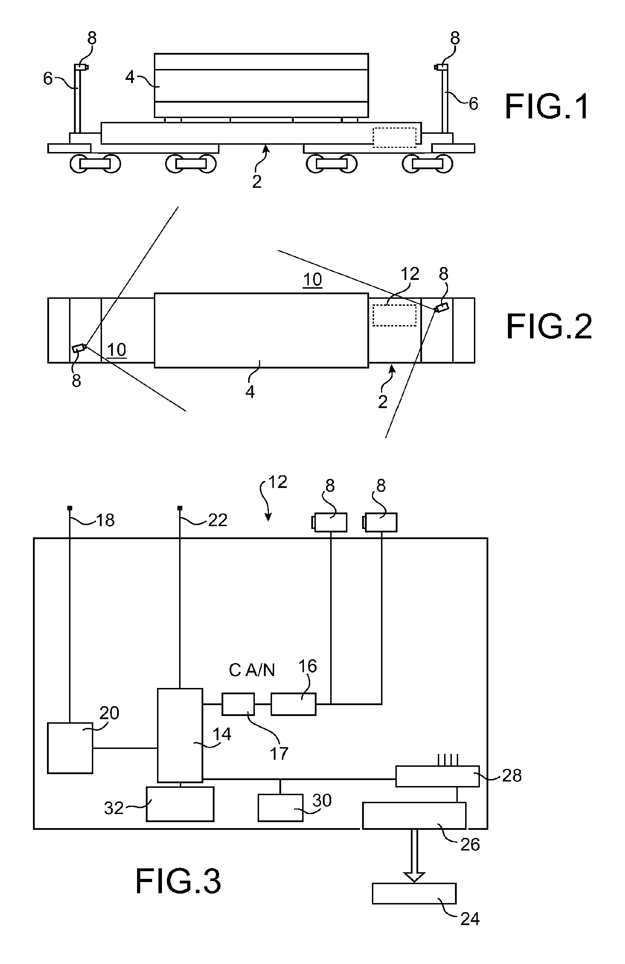

Sur les figures 1 et 2, la référence générale 2 désigne un wagon transportant un chargement 4 que l'on désire protéger au moyen du dispositif de surveillance embarquée de l'invention. Dans cet exemple, la surveillance des abords du wagon est assurée au moyen de deux caméras. A cet effet, le wagon comporte un mat 6 à deux de ses extrémités diagonalement opposées. Une tête de caméra 8 est disposée à l'extrémité de chacun des deux mats 6. Comme on peut le voir plus particulièrement sur la figure 2, chacune des têtes de caméra 8 couvre un champ 10 qui contient entièrement le chargement 4 et les abords de ce chargement. Les deux caméras se font face. La caméra située à gauche, selon la figure 2, surveille une extrémité du wagon tandis que l'autre caméra, située à droite, selon la figure, surveille l'autre extrémité de ce wagon. Ainsi toute approche du wagon sera détectée et enregistrée même depuis derrière une caméra et il sera impossible à une personne mal intentionnée de s'approcher du wagon sans pénétrer dans le champ des caméras. Toutefois il est possible de prévoir davantage de caméras, par exemple quatre caméras, une à chacun des coins du wagon.

La référence 12 désigne un boîtier électronique auquel les deux têtes de caméra 8 sont reliées.

On a représenté sur la figure 3 un schéma du boîtier électronique 12. Il renferme un serveur 14. équipé d'un processeur. Le serveur est relié aux têtes des caméras 8 par l'intermédiaire d'un convertisseur analogique/numérique 16 et d'un processeur 17. Ce processeur est unique pour l'ensemble des caméras lorsqu'il en a plusieurs, comme c' est le cas dans le présent exemple. Le processeur étant disposé dans le boîtier 12 qui contient le serveur embarqué 14, seules les têtes des caméras sont extérieures au boîtier.

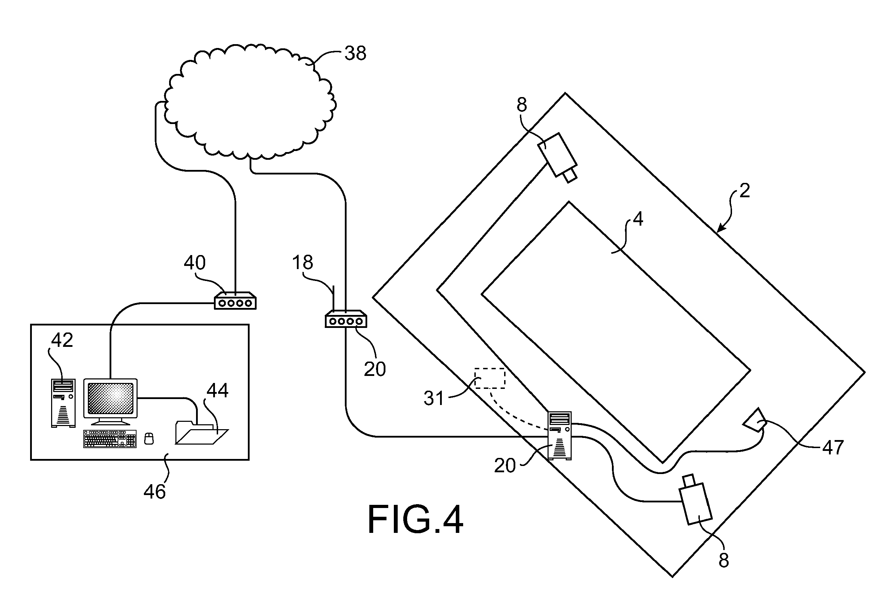

Les caméras 8 sont capables de fonctionner par très basse luminosité. Elles sont capables d'enregistrer des images à partir d'une luminosité égale à 0,0003 Lux. A des niveaux d'éclairement aussi faibles les caméras fournissent uniquement des images en noir et blanc parce que la lumière n'existe pas réellement. Pour éviter que les images ne soient voilées par un contre-jour, il est possible de prévoir un ou des projecteurs à infrarouge 47 (voir figure 4).

Le serveur 14 est relié à une antenne 18, par exemple une antenne GPRS (General Packet Radio Service) reliée à un modem GPRS 20.

Le GPRS est un service à valeur ajoutée non vocal qui permet de transmettre des informations par l'intermédiaire d'un réseau de téléphonie mobile. Sa vitesse maximale théorique est de 171,2 kilooctets par seconde. Le GPRS est une technologie facile a utiliser qui peut être mise en oeuvre et entretenue sans expertise approfondie. Il peut être remplacé par l'EDGE (Enhanced Data Rates for GSM Evolution) simplement en remplaçant le modem GPRS par un modem EDGE. Il est également possible d'utiliser le modem sans fil MultiModem EDGE qui est compatible à la fois avec les technologies GPRS et EDGE.

Le GPRS est une infrastructure Internet ouverte. Elle est par conséquent théoriquement vulnérable au piratage. Pour empêcher de telles attaques sur le système, il comporte de préférence un pare-feu. Ce pare-feu fournit automatiquement un VPN (Virtual Private Network) qui encrypte les informations de manière à assurer leur confidentialité. Il rejette également toute connexion avec des utilisateurs qui ne sont pas authentifiés, et de cette manière, empêche les pirates d'avoir accès au système.

Le serveur 14 est en outre relié à une antenne GPS 22. Il est alimenté en courant électrique par une batterie 24 reliée au serveur par l'intermédiaire d'un convertisseur de tension 26 et de relais de puissance 28. Un moyen de détection de l'arrêt du wagon renseigne le serveur 14 sur l'état arrêté ou en mouvement du wagon. Dans cet exemple ce moyen est un détecteur de vibration 30 mais il pourrait aussi s'agir d'un détecteur de distance à ultrasons. Une unité de stockage amovible 32 permet d'enregistrer les données du serveur 14. L'unité 32 est de préférence une mémoire flash. Ainsi, il n'y a pas de partie mobile dans le boîtier électronique 12. En particulier, il n'y a pas de disque dur tournant.

On a représenté sur la figure 4 un schéma d'ensemble du système de surveillance de l'invention. Le modem GPRS 20 par l' intermédiaire de son antenne 18 transmet les données qui lui sont fournies par le serveur 14 sur Internet 38. Ces données peuvent ensuite être récupérées, par exemple au moyen d'un modem ADSL classique 40 sur un poste distant 42. Ces données peuvent en outre être archivées sur une mémoire de stockage de masse 44. La référence 46 désigne le centre de surveillance dans son ensemble.

Une fois que le boîtier électronique 12 est relié aux batteries 24 par le câble d'alimentation, le processeur du serveur 14, le GPS et le modem GPRS démarrent automatiquement et enregistrent le wagon au centre de surveillance 46. Les caméras ne démarrent pas automatiquement.

Le système est apte a fonctionner selon trois modes différents : un mode de fonctionnement normal, un mode d'hibernation et un mode de fonctionnement forcé.

Dans le mode de fonctionnement normal du système de surveillance, le système fonctionne différemment selon que le wagon est à l'arrêt ou en mouvement. Le serveur échantillonne donc de manière continue le détecteur de vibration 30 pour déterminer si le wagon est en mouvement ou non.

Lorsque le détecteur 30 a fourni au serveur l'information que le wagon est à l'arrêt, le serveur enclenche la mise sous tension des caméras et active le moyen de détection de mouvement aux abords du moyen de transport. Ce moyen pourrait être constitué, notamment, par un détecteur à infrarouge 31 représenté en traits pointillés. Toutefois, dans l'exemple décrit, la détection de mouvement s'effectue visuellement par le traitement informatique effectué par le serveur des images qu' il reçoit des caméras. Chaque caméra échantillonne son champ de vision à un intervalle de temps défini par l' opérateur et qui peut atteindre une demie seconde. Le serveur compare les images pour déterminer s'il y eu un changement important d'une image à l'autre ce qui indique que quelque chose ou quelqu'un s'est déplacé dans le champ de vision. Les paramètres qui déterminent ce qu'il faut entendre par changement important peuvent être contrôlés complètement par l'opérateur. Lorsqu'un mouvement est détecté, les images sont transmises par le serveur 14 au centre de surveillance 46 à un intervalle de temps défini par l'opérateur.

La réception d'images au centre de surveillance active un logiciel d'affichage qui affiche aussitôt les images de l'intrusion dans le champ des caméras de telle sorte que l'opérateur du centre de surveillance a une vue instantanée de la situation aux abords du wagon. Le logiciel d'affichage est par exemple le logiciel Quick View® commercialisé par la société Canberra.

L'entête de ces images les identifie comme une alarme. Elles comportent la date et l'heure, les coordonnées GPS du wagon, l'état des batteries et le mode de fonctionnement du système.

Les images de l'intrusion continuent à être transmises à l'intervalle de temps défini par l'opérateur jusqu'à ce qu'il n'y ait plus de changement dans l'image. Un nombre défini par l'opérateur d'images post-alarme peut également être transmis.

Si la communication est perdue, une alarme signalant la perte de communication s'affichera au centre de surveillance et les images qui n'auront pu être transmises seront enregistrées sur l'unité de stockage amovible 32. Une fois que la communication aura été rétablie, les images enregistrées durant la perte de la communication seront transmises au centre de surveillance.

Lorsque le wagon 2 se met en mouvement, le détecteur 30 fournit au serveur l'information que le wagon est en mouvement. Les caméras sont alors mises hors tension par le serveur et aucune image n'est recueillie. Le serveur se met en mode d'attente. Dans ce mode il échantillonne le GPS et attend des commandes provenant du centre de surveillance.

Outre le mode de fonctionnement normal qui vient d'être décrit, le système peut également fonctionner en mode d'hibernation. C'est l'opérateur du centre de surveillance qui commande à distance le passage d'un mode dans un autre. Lorsque le serveur reçoit une commande du centre de surveillance de se désactiver, il met immédiatement les caméras hors tension et entre en mode de veille, que le moyen de transport soit en mouvement ou à l'arrêt. Ce mode de fonctionnement est intéressant lorsque le wagon se trouve dans une zone où aucune intrusion n'est à craindre. Il permet d'augmenter l'autonomie du système en évitant d'effectuer une surveillance inutile.

Le système reste en état de veille jusqu'à ce qu'il reçoive une nouvelle commande du centre de surveillance. Lorsque le processeur reçoit une commande du centre de surveillance de se mettre en mode de fonctionnement normal, il reprend le mode de fonctionnement normal.

Enfin, dans un troisième mode de fonctionnement, le système peut fonctionner en mode forcé. Là encore, c'est l'opérateur du centre de surveillance qui commande à distance le changement de mode de fonctionnement. Dans ce mode, le serveur enclenche la mise sous tension en continu de la caméra, que le moyen de transport soit en mouvement ou à l'arrêt, le serveur (14) transmettant alors des données en continu au centre de surveillance par l'intermédiaire du moyen de télécommunication (18, 20). Le système reste dans cet état actif jusqu'à ce qu'il reçoive une nouvelle commande du centre de surveillance.

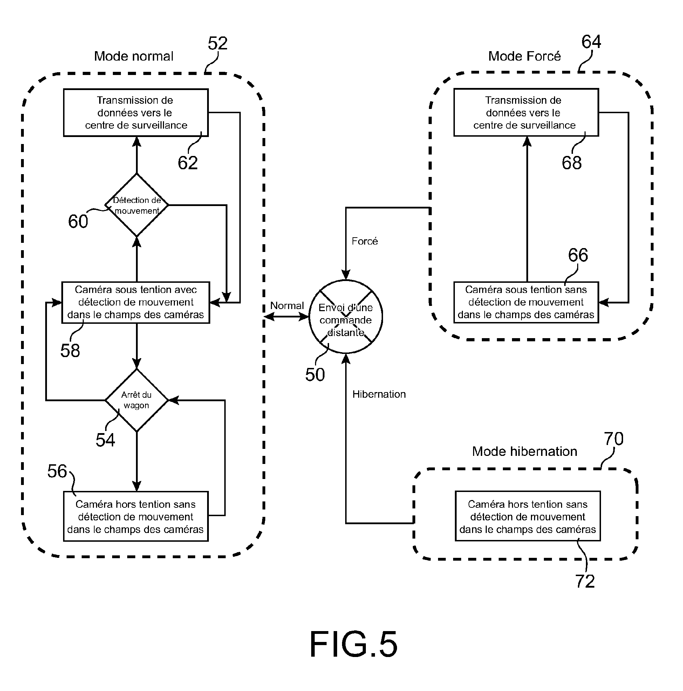

On a représenté sur la figure 5 un logigramme qui synthétise le fonctionnement du dispositif de surveillance conforme à la présente invention. En 50 le centre de surveillance 46 envoie une commande distante permettant de sélectionner le mode de fonctionnement normal forcé ou en hibernation du système. Dans le mode de fonctionnement normal 52, en 54 on teste si le wagon est ou non à l'arrêt. S'il ne l'est pas en 56, les caméras sont mises hors tension et il n'y a pas de détection de mouvement. Si, au contraire, le wagon est à l'arrêt, les caméras sont mises sous tension et le mouvement dans le champ de ces caméras peut être détecté en 58. En 60 on teste si un mouvement est détecté ou non. Si ce n'est pas le cas la détection de mouvement se poursuit en 58. Si c'est le cas en 62, des données sont transmises vers le centre de surveillance 46. La transmission de données vers le centre de surveillance se poursuit aussi longtemps que la détection de mouvement a lieu. Lorsque la détection de mouvement cesse la transmission d'images vers le centre de surveillance prend fin.

Lorsque qu'une commande de mise en mode forcé du système est envoyée par le centre de surveillance 46 le système passe en mode forcé 64. En 66 les caméras sont mises sous tension que le wagon soit à l'arrêt ou en mouvement mais la détection de mouvement n'est pas activée. En d'autres termes, qu'il y ait ou non détection de mouvement, des données sont transmises en 68 vers le centre de surveillance. Le système reste en mode de fonctionnement forcé aussi longtemps qu'une nouvelle commande ne vient pas y mettre fin.

Lorsqu'une commande d'hibernation distante est envoyée au système, le système passe en mode d'hibernation 70. Dans ce cas en 72, les caméras sont mises hors tension sans détection de mouvement. Le système reste en mode d'hibernation aussi longtemps qu'une nouvelle commande ne le fait pas passer dans un autre mode.

## Revendications

1. Système de surveillance des abords d'un moyen de transport **caractérisé en ce qu'**il comprend :
- au moins une caméra (8) embarquée à bord du moyen de transport (2), le champ (10) de cette caméra couvrant la totalité des abords du moyen de transport ;
- un moyen de détection de mouvement (31) aux abords du moyen de transport ;
- un serveur embarqué (14) qui peut recevoir des images de la caméra (8) et des informations du moyen de détection de mouvement aux abords du moyen de transport ;
- un moyen de télécommunication (18, 20) pour transmettre des données fournies par le serveur (14) à un centre de surveillance (46) situé à distance du moyen de transport ;
- un moyen (30) de détection de l'arrêt du moyen de transport,
- le serveur enclenchant la mise sous tension ou hors tension de la caméra et activant ou désactivant le moyen de détection de mouvement aux abords du moyen de transport en fonction des informations qu'il reçoit du moyen (30) de détection de l'arrêt du moyen de transport.

2. Système de surveillance selon la revendication 1, **caractérisé en ce que** dans un mode de fonctionnement normal (52),
le serveur (14) enclenche la mise sous tension de la caméra et active le moyen de détection de mouvement aux abords du moyen de transport lorsqu'il a reçu du moyen de détection de l'arrêt du moyen de transport l'information que ce dernier est à l'arrêt, le serveur (14) transmettant alors des données au centre de surveillance (46) par l'intermédiaire du moyen de télécommunication (18, 20) lorsqu'un mouvement a été détecté aux abords du moyen de transport ,
le serveur met la caméra hors tension et désactive le moyen de détection de mouvement aux abords du moyen de transport lorsqu'il a reçu du moyen de détection (30) de l'arrêt du moyen de transport l'information que ce dernier est en mouvement.

3. Système de surveillance selon la revendication 1, **caractérisé en ce que** dans un mode d'hibernation (70) le serveur (14) enclenche la mise hors tension de la caméra (8) et désactive le moyen de détection de mouvement aux abords du moyen de transport, que le moyen de transport soit en mouvement ou à l'arrêt.

4. Système de surveillance selon la revendication 1, **caractérisé en ce que** dans un mode de fonctionnement forcé (64) le serveur enclenche la mise sous tension en continu de la caméra, que le moyen de transport soit en mouvement ou à l'arrêt, le serveur (14) transmettant alors des données en continu au centre de surveillance par l'intermédiaire du moyen de télécommunication (18, 20).

5. Système de surveillance selon l'une des revendications 1 à 4, **caractérisé en ce que** le moyen de détection de mouvement aux abords du moyen de transport est constitué soit par un détecteur à infrarouge (31), soit par un traitement par le serveur (14) des images qu'il reçoit de la caméra (8) afin de détecter un mouvement dans son champ.

6. Système de surveillance selon l'une des revendications 1 à 5, **caractérisé en ce que** les données transmises par le moyen de télécommunication (18, 20) comprennent des images des abords du moyen de transport.

7. Système de surveillance selon la revendication 6, **caractérisé en ce que** les données transmises par le moyen de télécommunication (18, 20) comprennent, outre des images, des données choisies dans le groupe comprenant les coordonnées GPS du moyen de transport, l'état de batteries (24) d'alimentation du système, l'horodatage des images, un numéro d'identification du moyen de transport, un numéro d'identification de la caméra, l'état arrêté ou en mouvement du moyen de transport, le mode de fonctionnement normal, en hibernation ou forcé du système, des sons.

8. Système de surveillance selon l'une des revendications 1 à 7, **caractérisé en ce que** le moyen de détection de l'arrêt du moyen de transport est constitué soit par un détecteur de vibrations (30), soit par un détecteur de distance à ultrasons.

9. Système de surveillance selon l'une des revendications 1 à 8, **caractérisé en ce que** le moyen de détection de mouvement aux abords du moyen de transport détecte le mouvement dans le champ de la caméra.

10. Système de surveillance selon l'une des revendications 1 à 9, **caractérisé en ce qu'** il comporte des moyens de stockage (32) des images prises par la caméra (8).

11. Système de surveillance selon l'une des revendications 1 à 10, **caractérisé en ce que** la caméra (8) est apte à enregistrer des images à partir d'une luminosité égale à 0,0003 Lux.

12. Système de surveillance selon la revendication 11, **caractérisé en ce qu'**il comporte des projecteurs à infrarouge (47).

13. Système de surveillance selon l'une des revendications 1 à 10, **caractérisé en ce qu'**il comporte deux caméras (8) situées à des coins diagonalement opposés du moyen de transport (2).

14. Système de surveillance selon l'une des revendications 1 à 12, **caractérisé en ce qu'**il comporte quatre caméras (8) situées aux quatre coins du moyen de transport (2).

15. Système de surveillance selon l'une des revendications 1 à 13 **caractérisé en ce que** chaque caméra comprend une tête (8) reliée à un processeur, ce processeur étant unique pour l'ensemble des caméras s'il y en a plusieurs, le processeur étant disposé dans un boîtier (12) qui contient le serveur embarqué (14), les têtes des caméras étant seules extérieures au boîtier.
